(19) **Europäisches Patentamt European Patent Office Office européen des brevets**

(11) **EP 2 534 640 B1**

(12) **FASCICULE DE BREVET EUROPEEN**

(45) Date de publication et mention de la délivrance du brevet:
**20.05.2015 Bulletin 2015/21**

(21) Numéro de dépôt: **11708538.1**

(22) Date de dépôt: **08.02.2011**

(51) Int Cl.:
***G06T 7/00*** *(2006.01)*

(86) Numéro de dépôt international:
**PCT/FR2011/050256**

(87) Numéro de publication internationale:
**WO 2011/098716 (18.08.2011 Gazette 2011/33)**

(54) **PROCÉDÉ ET DISPOSITIF DE DÉTECTION DE GOUTTES DANS UNE IMAGE NUMÉRIQUE; PROGRAMME D'ORDINATEUR POUR LA MISE EN OEUVRE DE CE PROCÉDÉ**

VERFAHREN UND VORRICHTUNG ZUR ERKENNUNG VON TROPFEN IN EINEM DIGITALEN BILD SOWIE COMPUTERPROGRAMM ZUR ANWENDUNG DIESES VERFAHRENS

METHOD AND DEVICE FOR DETECTING DROPS IN A DIGITAL IMAGE; COMPUTER PROGRAM FOR IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.02.2010 FR 1050902**

(43) Date de publication de la demande:
**19.12.2012 Bulletin 2012/51**

(73) Titulaire: **Institut Français des Sciences et Technologies des Transports, de l'Aménagement et des Réseaux 77420 Champs sur Marne (FR)**

(72) Inventeurs:
- **CORD, Aurélien F-75014 Paris (FR)**
- **AUBERT, Didier F-91540 Mennecy (FR)**

(74) Mandataire: **Intès, Didier Gérard André et al Cabinet Beau de Loménie 158, rue de l'Université 75340 Paris Cedex 07 (FR)**

(56) Documents cités:
**JP-A- 2001 141 838     US-B1- 6 313 454**

- **SMITH DD ET AL: "Median filter algorithm for estimating the threshold of detection on custom protein arrays", BIOTECHNIQUES, vol. 41, no. 1, 1 juillet 2006 (2006-07-01), pages 74-77, XP002599614,**

**Description**

La présente invention concerne un procédé, un programme d'ordinateur et un dispositif, pour la détection de gouttes dans une image numérique ou à partir d'une pluralité d'images numériques.

Le besoin de détecter des gouttes dans des images numériques se fait sentir dans différentes applications. Ce besoin peut se présenter tout d'abord dans des procédés industriels, dans lesquels il est nécessaire ou important de déterminer s'il y a condensation et formation de gouttes au cours du procédé. Une autre application importante est la conduite automobile. Lorsqu'un véhicule circule à l'extérieur, par temps de pluie, son pare-brise se couvre de gouttes. On comprend que lorsque la pluie commence à tomber, il peut être intéressant de pouvoir se rendre compte de ce changement en détectant la présence de gouttes, que ce soit pour déclencher de manière automatique un essuie-glace, ou pour transmettre une information au système de commande du véhicule et adapter ainsi le comportement de celui-ci à la situation de pluie ainsi détectée.

Plus généralement, la détection de gouttes dans une image peut être importante dans tout procédé qui met en oeuvre des images numériques, susceptibles d'être troublées ou perturbées par la présence de gouttes dans l'image. Par exemple, des systèmes de vidéo surveillance peuvent être améliorés au moyen de procédés de traitement d'images intégrant une étape de détection de gouttes dans l'image, suivie d'une étape de correction de l'image.

De manière connue, on utilise à bord de véhicules automobiles comme dispositifs de détection de goutte, des détecteurs de pluie, réalisant uniquement la fonction de détection de goutte (ou de pluie), constitués principalement par un émetteur infrarouge couplé à un détecteur. Cet ensemble est disposé accolé au pare-brise. L'émetteur émet un rayonnement infrarouge en direction du pare-brise, et le détecteur reçoit le signal renvoyé par celui-ci. Si une goutte d'eau se trouve sur la face extérieure du pare-brise, une partie du rayonnement infrarouge est réfléchie par celle-ci et cette réflexion peut être détectée.

Bien que ces capteurs soient généralement fiables, ils présentent cependant certains inconvénients. Tout d'abord, la détection de gouttes n'est rendue possible que sur une petite partie du pare-brise. Ensuite, ces capteurs ne fournissent pas une information quantitative sur le nombre de gouttes déposées sur le pare-brise. Enfin, ces capteurs sont habituellement placés dans l'habitacle au niveau du rétroviseur central, et occupent ainsi un espace convoité par de nombreuses applications embarquées à bord du véhicule.

Par ailleurs, un procédé de détection de gouttes dans une image est présenté par la publication 'Rainy Weather Recognition from In-vehicle Camera Images for Driver Assistance', de MM.Kurihata et al., Intelligent Vehicles Symposium, IEEE, p205-210, 2005.

Dans cette publication est présenté un procédé de détection de gouttes dans une image numérique. Ce procédé comporte une phase préalable d'apprentissage statique, dans lequel l'analyse en composantes principales permet l'apprentissage de caractéristiques de gouttes, à partir d'une large base de données. La mise en oeuvre du procédé proprement dit se fait ensuite au cours d'une phase d'appariement, durant laquelle des parties d'image sont appariées ou du moins sont comparées à des images de référence, afin d'identifier des gouttes.

Ce système ne donne de bons résultats qu'essentiellement sur un fond relativement uni, par exemple une image du ciel. En revanche, il manque de robustesse sur un fond complexe, par exemple une image représentant un environnement urbain.

Un autre procédé de détection de gouttes dans une image est divulgué par le brevet US6313454 B1, publié le 6 novembre 2001. Une image de gradient est calculée et utilisée pour détecter les gouttes.

Un premier objectif de l'invention est donc de proposer un procédé robuste permettant la détection de gouttes apparaissant dans une image numérique acquise à travers une paroi transparente à l'aide d'un système d'acquisition d'image ; procédé permettant non seulement de détecter la présence de gouttes, mais également la position de celles-ci.

Cet objectif est atteint grâce au fait que le procédé de détection de gouttes comporte les étapes suivantes :

    b) on établit une image de gradient à partir de ladite image numérique, en affectant à chaque pixel la valeur du gradient à l'emplacement du pixel ;

    c) on filtre ladite image de gradient pour obtenir une image filtrée, en affectant à chaque pixel une valeur obtenue en appliquant un filtre de rang à un voisinage du pixel ;

    d) on établit alors un masque représentant la position des gouttes détectées dans ladite image numérique, masque dans lequel sont activés les pixels pour lesquels la différence entre la valeur du pixel dans l'image filtrée et la valeur du pixel dans l'image de gradient excède une valeur prédéterminée.

Par 'masque', on entend une image binaire, dont les pixels valent soit 0 (pixel désactivé), soit 1 (pixel activé). Le système d'acquisition d'image peut être notamment un appareil photo ou une caméra numérique.

Le procédé comporte ainsi deux étapes b) et c) de préparation d'images intermédiaires, l'image de gradient et l'image filtrée, à partir desquelles sont extraites les informations relatives à la présence de gouttes, au cours de l'étape d) de création de masque.

Pour chaque pixel de l'image filtrée, l'étape de filtrage de rang consiste à déterminer pour un voisinage prédéterminé du pixel (par exemple, une boîte 15 x 15 pixels ou 21 x 21 pixels centrée sur le pixel considéré), la valeur en dessous de laquelle se trouvent une fraction (un pourcentage) prédéterminée des pixels, et corrélativement au dessus de laquelle se trouvent une fraction complémentaire prédéterminée des pixels. Par exemple, on cherche à déterminer la valeur au dessous de laquelle se trouvent 95% des pixels du voisinage considéré. Cette valeur est alors affectée au pixel considéré, dans l'image filtrée.

L'image filtrée est une image dans laquelle le 'bruit' local de l'image de gradient est réduit. On choisit de préférence une taille de voisinage nettement supérieure à la taille d'une goutte, par exemple, le triple ou le quadruple de la taille d'une goutte dans les deux directions.

Aussi, en soustrayant l'image filtrée de l'image de gradient, cela permet de faire ressortir les variations de gradient dues aux gouttes.

Il s'ensuit une grande robustesse du procédé, permettant à celui-ci de conserver de bonnes performances y compris pour des images représentant des scènes complexes, par exemple un environnement urbain.

Un deuxième objectif de l'invention est de proposer un procédé robuste de détection de gouttes à partir d'une pluralité d'images numériques, permettant la détection de gouttes apparaissant dans une pluralité d'images numériques acquises à travers une paroi transparente à l'aide d'un système d'acquisition d'image.

Cet objectif est atteint grâce au fait que le procédé comporte les étapes suivantes :

- on obtient successivement une pluralité de masques à partir desdites images numériques, par le procédé défini précédemment ;
- au cours d'une étape h), on établit un masque confirmé, contenant les gouttes apparaissant dans au moins une proportion prédéterminée des masques ainsi obtenus. On comprend que dans ce procédé, la pluralité d'images numériques à partir desquelles est mis en oeuvre le procédé peut être exploitée de différentes manières, à savoir :
- en calculant un masque pour chacune des images numériques ; ou
- en formant dans la pluralité d'images des groupes d'images numériques, permettant chacun l'obtention d'un masque, le masque confirmé étant alors obtenu sur la base de ces masques.

Un troisième objectif de l'invention est de proposer un programme d'ordinateur, dont l'exécution sur un ordinateur ou un calculateur permette de détecter des gouttes dans une image numérique ou une pluralité d'images numériques fournies au programme en tant que ddnnée(s) de départ (input).

Cet objectif est atteint grâce au fait que le programme d'ordinateur comprend des instructions pour la mise en oeuvre de l'un des procédés de détection de gouttes définis précédemment.

Un quatrième objectif de l'invention est de proposer un dispositif de détection de gouttes, permettant de détecter la présence de gouttes dans l'image de manière robuste, et pouvant être mis en oeuvre à l'aide d'un système d'acquisition d'image standard.

Cet objectif est atteint grâce au fait que le dispositif comporte un système d'acquisition d'image et un calculateur relié à celui-ci pour recevoir les images acquises par le système d'acquisition d'image, le calculateur étant apte à mettre en oeuvre le procédé défini précédemment. En particulier, l'invention vise les dispositifs de ce type utilisés comme dispositifs de détection de gouttes de pluie sur un pare-brise. Par calculateur, on entend ici soit un ordinateur, soit un composant électronique dédié, notamment un composant dont l'architecture physique (hardware) permet de réaliser certaines fonctions pouvant être réalisées également par un logiciel.

Ainsi, l'invention vise notamment un dispositif comportant un système d'acquisition d'image, et un tel calculateur relié à celui-ci pour recevoir les images acquises par le système d'acquisition d'image ;
Ledit calculateur comportant :

- des moyens d'établissement d'une image de gradient à partir de ladite image numérique, aptes à affecter à chaque pixel la valeur du gradient à l'emplacement du pixel pour constituer l'image de gradient ;
- des moyens de filtrage, aptes à constituer une image filtrée, en affectant à chaque pixel une valeur obtenue en appliquant un filtre de rang à un voisinage du pixel dans l'image de gradient ;
- de moyens d'établissement d'un masque représentant la position des gouttes détectées dans ladite image numérique, masque dans lequel sont activés les pixels pour lesquels la différence entre la valeur du pixel dans l'image filtrée et la valeur du pixel dans l'image de gradient excède une valeur prédéterminée.

Le calculateur peut comporter principalement une unité centrale, mais peut aussi être agencé avec plusieurs unités de calcul distribuées.

Dans un mode de réalisation, le calculateur comporte en outre des moyens pour compléter le masque en y activant des pixels non activés, situés entre des pixels activés proches.

Dans un mode de réalisation, le calculateur comporte en outre des moyens pour épurer le masque, en désactivant dans celui-ci des groupes de pixels activés connexes remplissant au moins un critère d'élimination prédéterminé, portant sur une propriété du groupe de pixels connexes.

Dans un mode de réalisation, le calculateur comporte en outre des moyens pour identifier des gouttes dans le masque obtenu, chaque goutte correspondant à un groupe de pixels activés connexes.

L'invention vise notamment un dispositif tel que décrit précédemment, agencé pour produire successivement une pluralité de masques à partir d'images numériques, et dont le calculateur comprend en outre des moyens de confirmation de masque, aptes à sélectionner dans un masque (dit masque 'confirmé') les gouttes apparaissant dans au moins une proportion prédéterminée des masques obtenus précédemment.

Dans un mode de réalisation, le dispositif comporte en outre des moyens de transmission, pour transmettre un signal de commande à une machine, ledit signal étant fonction du nombre ou de la densité de gouttes identifiées sur la ou les images numériques. Par densité de gouttes, on désigne ici le ratio entre le nombre de gouttes identifiées et la surface de la vitre sur laquelle les gouttes ont été détectées (la densité peut alors s'exprimer en nombre de gouttes/m$^2$), ou encore le ratio entre le nombre de gouttes identifiées et la surface exprimée en pixels d'une ou plusieurs régions d'intérêt dans l'image (la densité peut alors s'exprimer en nombre de gouttes/pixel ou nombre de gouttes/MPixels).

Un tel dispositif peut notamment être réalisé pour transmettre un signal de commande (ou de déclenchement) à un système d'essuie-glaces.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :

- les figures 1 et 2 représentent respectivement une image initiale à partir de laquelle le procédé selon l'invention est mis en oeuvre, et une image finale obtenue en représentant en noir les gouttes détectées ;
- la figure 3 est une vue en perspective d'un dispositif selon l'invention agencé dans un véhicule automobile ;
- la figure 4 est une vue schématique d'ensemble d'un procédé de détection de gouttes selon l'invention ;
- la figure 5 est une représentation d'une image numérique moyenne partielle, obtenue à partir d'un ensemble d'images numériques (étape a) du procédé) ;
- la figure 6 est une représentation d'une image numérique de gradient, obtenue à partir de l'image de la figure 5 (étape b) du procédé) ;
- la figure 7 est une représentation d'une image numérique filtrée, obtenue à partir de l'image de la figure 6 par filtrage de rang (étape c) du procédé) ;
- la figure 8 est une représentation d'un masque, obtenu par soustraction et seuillage à partir des images des figures 6 et 7 (étape d) du procédé) ; et
- la figure 9 est une représentation d'un masque confirmé, obtenu à partir du masque de la figure 5 (étape h) du procédé).

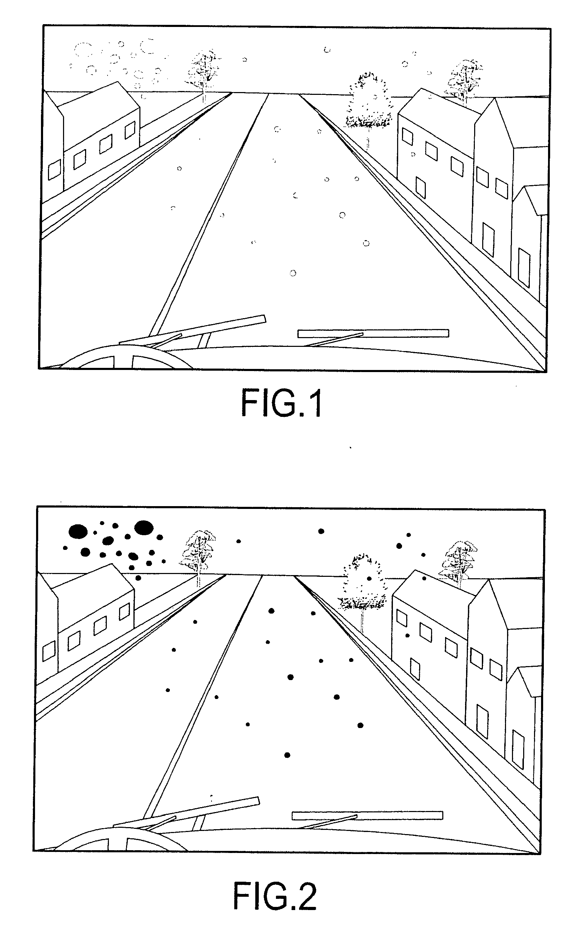

Les figures 1 à 3 présentent une application importante de l'invention, à savoir la détection de gouttes sur le pare-brise d'un véhicule automobile.

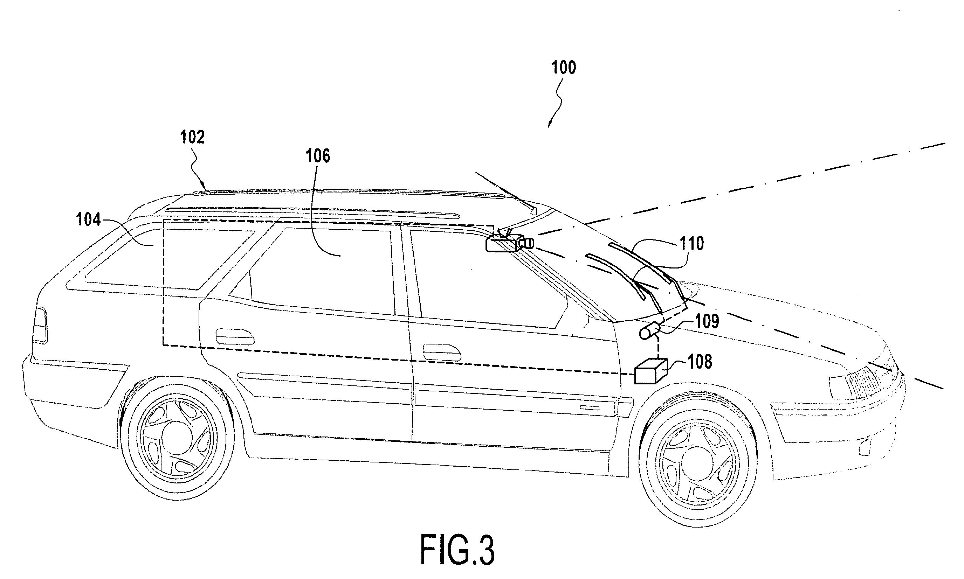

Les figures 1 et 2 représentent des images numériques obtenues à l'aide d'un dispositif de détection de gouttes 100 représenté sur la figure 3.

La figure 1 représente une image brute, telle que fournie par la caméra. La figure 2 représente une image formée après mise en oeuvre du procédé, en superposant à l'image brute le masque obtenu à l'aide du procédé. Les pixels des gouttes détectées apparaissent ainsi en noir. Avantageusement cette deuxième image permet en un instant d'évaluer le nombre et la densité de gouttes présentes sur le pare-brise.

La figure 3 présente schématiquement le dispositif 100 de détection de gouttes selon l'invention utilisé pour produire ce résultat. Installé dans un véhicule 102, ce dispositif 100 comporte une caméra 104, placée dans l'habitacle 106, et un calculateur 108 ou ordinateur de bord auquel est reliée la caméra 104. La caméra 104 est focalisée à l'infini, pour fournir une image nette du paysage. L'obtention d'images nettes de l'environnement du véhicule, grâce à la focalisation à l'infini, contribue à l'efficacité des traitements d'images réalisés par le calculateur 108 (traitements définis plus loin). A contrario, une caméra qui serait focalisée sur le pare-brise, et ne fournissant pas d'images nettes de l'environnement, ne permettrait pas d'obtenir l'efficacité souhaitée pour la détection de gouttes.

En outre, la focalisation à l'infini de la caméra permet d'obtenir des images nettes de l'environnement du véhicule : ces images peuvent être exploitées pour d'autres traitements utiles, comme la détection de la signalisation routière, etc.

Sur le calculateur 108 s'exécute un programme selon l'invention, qui permet de mettre en oeuvre le procédé de détection de gouttes à partir des images acquises successivement par la caméra.

Le calculateur 108, en fonction des informations obtenues quant à la présence de gouttes sur le pare-brise, déclenche lorsque c'est nécessaire un moteur électrique 109 qui actionne des essuie-glaces 110.

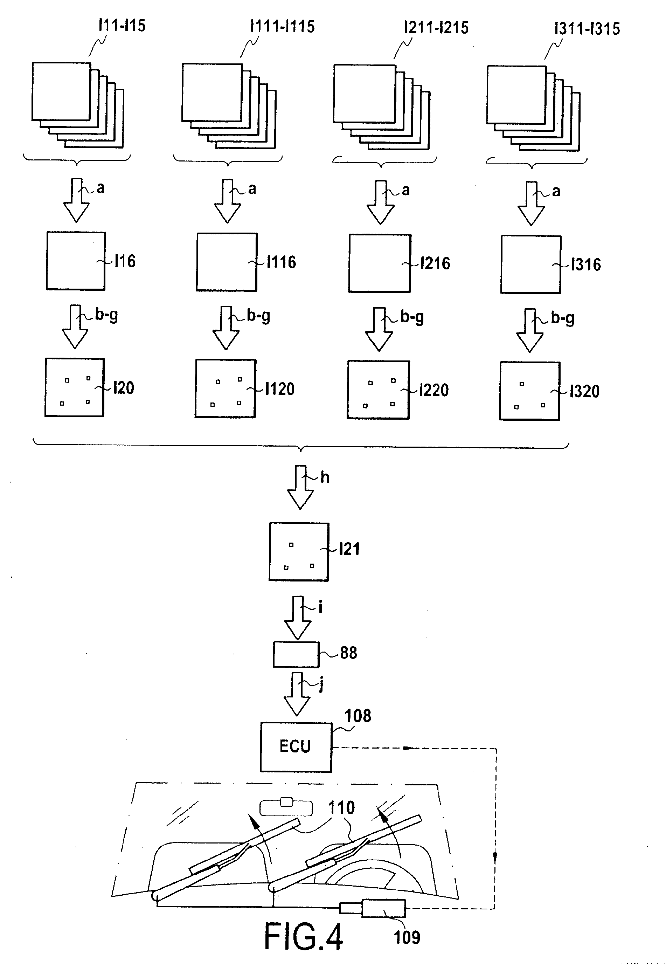

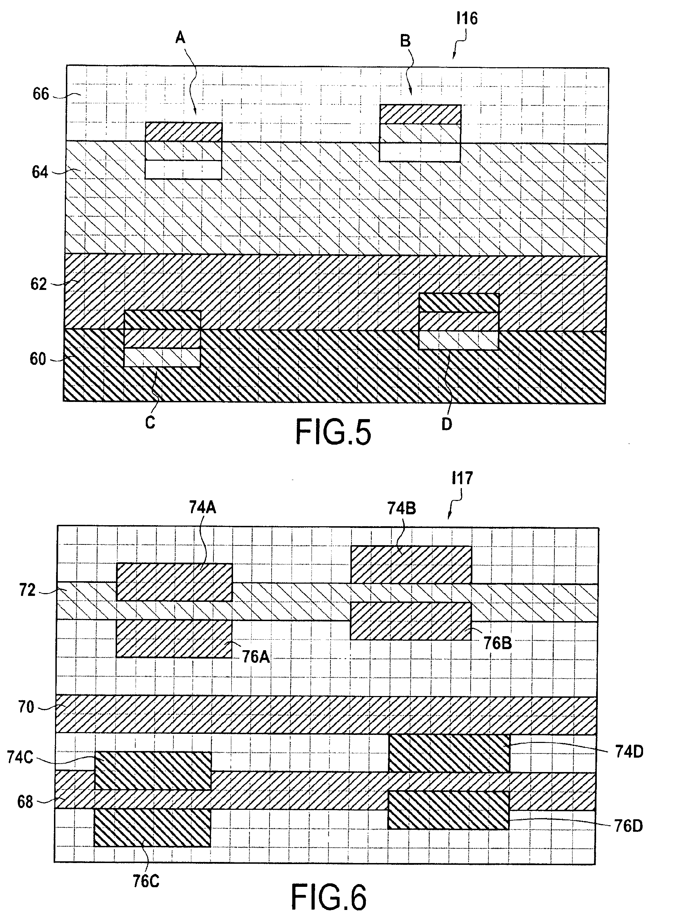

En faisant référence aux figures 4 à 9, un mode de mise en oeuvre du procédé de détection de gouttes selon l'invention va maintenant être décrit. La figure 4 représente une vue schématique d'ensemble du procédé, alors que les figures 5 à 9 illustrent respectivement les étapes a) à e) de celui-ci.

Le procédé est mis en oeuvre à partir d'une séquence d'images numériques produites par une caméra numérique standard comme une caméra matricielle CCD ou CMOS.

Cette séquence d'images est organisée en groupes d'images. Ces groupes d'images peuvent être constitués de différentes manières : soit sans recouvrement entre les groupes, comme dans l'exemple qui va être détaillé, ci-après, ou encore avec un recouvrement entre les groupes, ce qui signifie que des images peuvent être communes à deux groupes voire davantage. Par exemple, si des images I1 I2, I3, I4, etc., sont acquises continûment par une caméra, les groupes d'images peuvent être constitués de la manière suivante : Le premier groupe peut contenir les images I1 à I5, le deuxième groupe les images I2 à I6, le troisième groupe les images I3 à I7, etc.

Dans le mode de réalisation illustré par les figures 4 à 9, on considère une séquence de 20 images I11 à I15, I111 à I115, I211 à I215, I311 à I315.

Dans un premier temps, les images sont groupées par groupes de cinq images (cela pourrait être un nombre entier quelconque au lieu de cinq) : Cela constitue donc quatre groupes d'images I11 à I15, I111 à I115, I211 à I215, I311 à I315.

Pour chacun de ces groupes, la première étape a) du procédé consiste à déterminer une image moyenne à partir des images numériques du groupe. Ainsi, à partir des images I11 à I15, on forme l'image moyenne I16 ; à partir des images I111 à I115, on forme l'image moyenne I116, etc. Dans chaque image moyenne, on affecte à chaque pixel la valeur moyenne affectée au pixel dans les images du groupe d'images considéré.

Dans le cas où les images I11-I15, I111-I115, etc., sont des images en couleur, on transforme l'image moyenne en image en niveau de gris.

On réalise ensuite une suite d'opérations (étapes b) à g) du procédé) qui permettent d'obtenir un masque (I20, I120, I220, I320) pour chacune des images moyennes ainsi obtenues. Ces masques sont des images binaires dans lesquelles sont activés (c'est-à-dire, prennent la valeur 1) les pixels sur lesquels la présence d'une goutte a été détectée.

Les figures 5 à 9 représentent les images numériques obtenues au cours des étapes a) à e) du procédé. Pour faciliter la compréhension, ces étapes du procédé sont illustrées au moyen d'images partielles comprenant seulement 18 lignes et 27 colonnes. Naturellement, les images complètes ont habituellement des dimensions plus grandes, par exemple 480 lignes et 640 colonnes.

Sauf mention contraire, l'explication qui suit est donnée pour les traitements réalisés à partir des images I11-I15.

Comme cela a été dit, au cours de l'étape initiale a) du procédé (figure 5), on moyenne une pluralité d'images numériques, en l'occurrence les images I11-I15, de manière à obtenir une image moyenne I16. Celle-ci forme l'image numérique sur la base de laquelle sont mises en oeuvre les étapes suivantes du procédé.

La figure 5 représente l'image moyenne I16, obtenue en faisant la moyenne pixel par pixel des images I11 à I15. La détermination de la valeur d'un pixel dans l'image moyenne peut se faire avec différentes formules connues de calcul d'une valeur moyenne d'un pixel parmi plusieurs images.

L'image numérique illustrée par la figure 5 représente un paysage avec en bas une première zone sombre 60 (la route) ; suivie immédiatement au dessus par une deuxième zone 62 gris moyen ; suivie par une troisième zone 64 et enfin par une quatrième zone 66 (le ciel, clair).

Cette image est altérée par la présence de quatre gouttes A, B, C, D. Chacune de ces gouttes occupe une zone de dimensions 3 x 4 pixels. Les gouttes représentent de manière inversée les teintes de la scène qu'elle reflètent : Ainsi, elles comportent des pixels sombres vers le haut, et des pixels clairs vers le bas, à l'inverse du paysage reflété (zones 60, 62, 64, 66).

L'étape suivante b) du procédé (figure 6) consiste à établir une image de gradient I17, à partir de l'image moyenne I16.

Pour établir l'image I17, on forme tout d'abord une première image de gradient 'en X' dans laquelle chaque pixel prend la valeur déterminée à l'aide de la formule suivante :

$$G_x(x,y) = |\, I_{16}(x,y) - I_{16}(x\text{-}1,y)|$$

dans laquelle $|...|$ représente la fonction valeur absolue, et $I_{16}(x,y)$ est la valeur prise par le pixel de la ligne x et la colonne y dans l'image I16. On calcule de même une première image de gradient 'en Y' suivant :

$$G_y(x,y) = |\, I_{16}(x,y) - I_{16}(x,y\text{-}1)|.$$

L'image de gradient I17 est alors obtenue en affectant à chaque pixel la valeur :

$$G(x,y) = \sqrt{\,(G_x(x,y)^2 + G_y(x,y)^2)}$$

dans laquelle $\sqrt{}$ représente la fonction 'racine carrée'. D'autres fonctions de gradient analogues peuvent être utilisées tout en demeurant dans le cadre de l'invention.

Naturellement, ce sont les variations de teinte qui apparaissent dans l'image de gradient I17. Ainsi, on distingue trois bandes horizontales 68, 70, 72, de largeur deux pixels. Celles-ci correspondent aux variations de teinte respectives entre les zones 60, 62, 64 et 66.

En outre, on distingue pour chaque goutte deux zones 74A, 76A, 74B, 76B, 74C, 76C, 74D, 76D, correspondant respectivement aux parties haute et basse des gouttes A, B, C, D. Comme l'image est plus contrastée dans sa partie inférieure, on note que les valeurs de gradient des gouttes C et D sont plus élevées que celles des gouttes A et B ; d'où il résulte que les zones 74C, 74D et 76C, 76D des gouttes C et D sont plus sombres que les zones correspondantes des gouttes A et B.

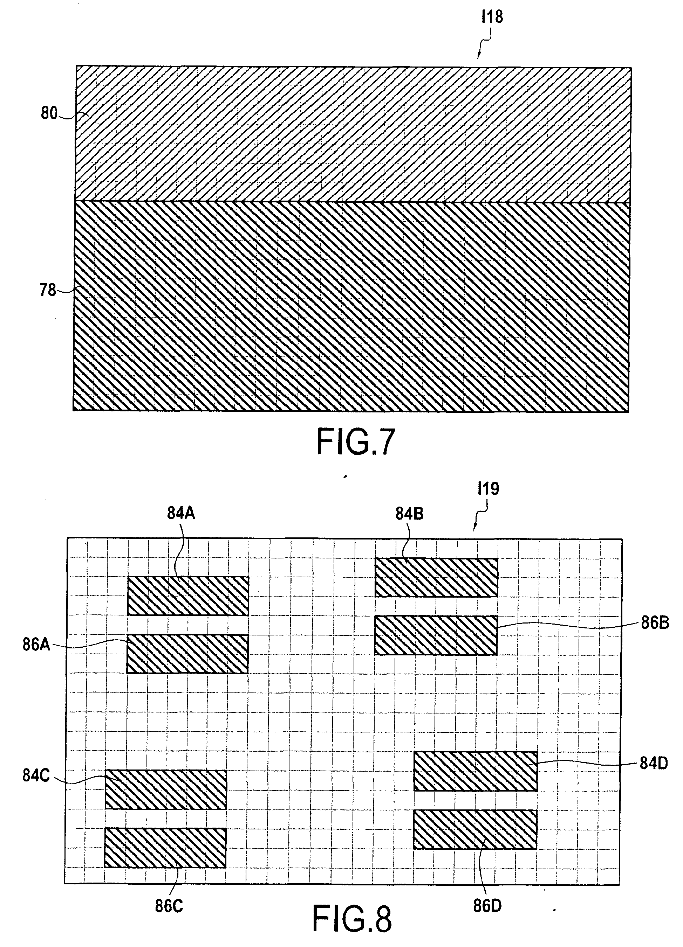

L'étape suivante c) du procédé (figure 7) consiste à filtrer l'image de gradient I17 pour obtenir une image filtrée I18, en affectant à chaque pixel une valeur obtenue par filtrage de rang. De manière connue, le filtrage de rang consiste à affecter à chaque pixel, la valeur en dessous (ou au dessus) de laquelle se trouve un pourcentage donné des valeurs des pixels situés dans un voisinage du pixel considéré. Le procédé présenté a été validé notamment en affectant à chaque pixel de l'image filtrée, la valeur en dessous de laquelle se trouvent 95% des pixels, dans un voisinage constitué par une boîte de 15x15 ou 21x21 pixels.

Dans l'image filtrée I18, on distingue une zone inférieure 78, sombre, et une zone supérieure, 80, plus claire. La zone inférieure 78 résulte essentiellement de la présence des zones sombres 68, 70, 74C 76C, 74D et 76D dans l'image de gradient I17.

L'étape suivante d) du procédé (figure 8) consiste à établir un masque 119 représentant la position des gouttes détectées. Cela se fait en deux étapes. Dans un premier temps, on forme une image par soustraction entre l'image de gradient I17 et l'image filtrée I18.

Ensuite, on établit le masque I19 par une opération de seuillage, en activant dans celui-ci seulement les pixels pour lesquels la différence entre la valeur du pixel dans l'image filtrée et la valeur du pixel dans l'image de gradient excède une valeur prédéterminée. Le masque I19 peut ainsi être considéré comme une 'image de fort gradient'.

Dans ce masque I19, on distingue des zones 84A, 86A, 84B, 86B, 84C, 86C, 84D, 86D, correspondant respectivement aux groupes supérieurs et inférieurs de pixels activés connexes, pour les gouttes A, B, C et D.

L'intérêt de la méthode est que les différentes zones de gradient (74A, 76A, 74B, 76B, 74C, 76C, 74D, 76D) sont effectivement détectées et activées dans le masque I19. Cela est permis par l'opération de soustraction de l'image filtrée à l'image de gradient au cours de l'étape d), qui permet de retirer de la valeur du gradient une composante locale. Si l'on avait seulement utilisé des fonctions de type gradient pour détecter la position des gouttes dans l'image, ce résultat n'aurait pas pu être obtenu.

En effet, réaliser l'opération de seuillage de l'image de gradient I17 avec un seuil ayant la valeur de la zone 78 (correspondant aux zones 74C 76C, 74D et 76D) ne permet pas la détection des gouttes A et B : Avec une telle valeur de seuil, les zones 84A, 86A, 84B et 86B n'apparaissent pas dans l'image seuillée. Inversement, réaliser l'opération de seuillage de l'image de gradient I17 avec un seuil ayant la valeur de la zone 80 (correspondant aux zones 74A 76A, 74B et 76B), aurait conservé en plus des gouttes A, B, C et D les zones 70 et 68, sans permettre de distinguer celles-ci des gouttes C et D.

Par conséquent le recours à l'image filtrée I18 au cours des étapes c) et d) permet avantageusement d'identifier dans l'image de gradient I17 les quatre gouttes A, B, C et D, et uniquement celles-ci.

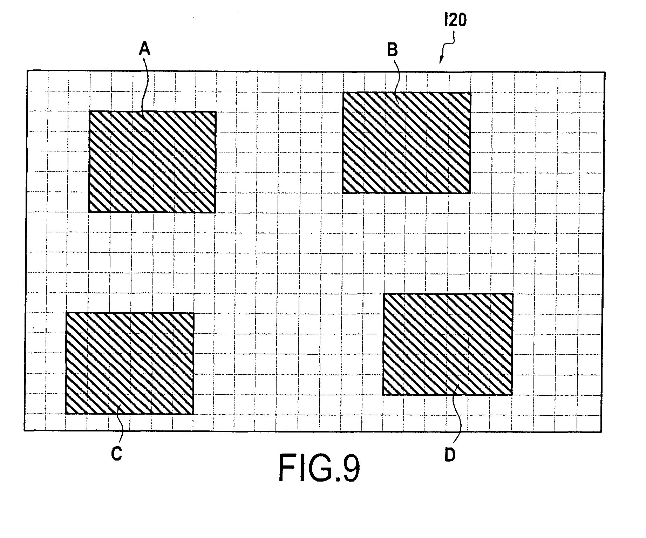

L'étape suivante e) du procédé (figure 9) consiste à compléter le masque en y activant des pixels non activés, situés entre des pixels activés proches.

Le but de cette étape est de remplir des 'trous' dans le masque, de manière à permettre que des zones de pixels activés proches, correspondant en fait à différentes parties d'une même goutte présente dans l'image, soient identifiées comme une seule et même goutte.

Dans l'expression, « situés entre des pixels activés proches », le terme « entre » doit être considéré de manière large. En fait, l'étape e) consiste à activer des pixels lorsqu'ils sont environnés ou cernés (au moins partiellement) par des pixels activés. Cette étape consiste donc plus précisément à activer chacun des pixels qui remplissent un critère d'activation, ce critère d'activation étant fonction du nombre, de la distance et/ou de la position des pixels activés situés au voisinage du pixel considéré.

Le voisinage du pixel considéré peut être défini de différentes manières et en fonction du critère d'activation choisi.

Dans un mode de réalisation, ce voisinage contient tous les pixels proches du pixel considéré, c'est-à-dire tous les pixels éloignés d'une distance moindre que la taille d'une goutte dans l'image (éventuellement, la taille maximale d'une goutte), ou d'une fraction de cette distance. Le critère d'activation consiste alors à activer tous les pixels qui ont au moins un nombre prédéterminé de pixels activés dans ce voisinage.

Dans d'autres modes de réalisation, la forme et la taille du voisinage peuvent être spécifiés.

Par exemple, il est possible d'utiliser comme voisinage les quatre pixels au dessus et en dessous du pixel considéré. Le critère d'activation consiste dans ce cas comme dans le mode de réalisation précédent, à activer les pixels qui ont au moins un nombre prédéterminé de pixels activés dans leur voisinage (ainsi défini). Ainsi dans l'exemple illustré par les figures, deux pixels activés au minimum doivent se trouver dans le voisinage d'un pixel considéré pour permettre l'activation de celui-ci. L'image I20 illustre cette fonction appliquée sur l'image I19.

Un exemple de masque ainsi complété est donné sur la figure 9. On y voit quatre zones de pixels activés connexes, correspondant aux quatre gouttes détectées A, B, C, et D.

L'étape suivante f) du procédé consiste à épurer le masque en désactivant dans celui-ci des groupes de pixels activés connexes remplissant au moins un critère d'élimination prédéterminé, portant sur une propriété du groupe de pixels connexes. L'objectif de cette étape est d'éliminer du masque des groupes de pixels activés connexes qui ne correspondraient pas à des gouttes présentes sur le pare-brise. Pour cela, on se fonde sur les propriétés physiques des liquides, qui entrainent que la taille des gouttes varie entre des limites minimale et maximale fixes, de même que l'allongement des gouttes ou encore leur excentricité.

Différents critères d'élimination peuvent donc (éventuellement simultanément) être utilisés. Dans l'exemple présenté, les critères suivants sont simultanément utilisés :

- un premier critère d'élimination est rempli si et seulement si le nombre de pixels du groupe de pixels activés connexes est inférieur à une première valeur prédéterminée et/ou supérieur à une deuxième valeur prédéterminée (il s'agit donc d'un critère portant sur la surface de la goutte) ;

- un deuxième critère d'élimination est rempli si et seulement si le rapport entre la hauteur et la largeur du groupe de pixels activés connexes est inférieur à une troisième valeur prédéterminée et/ou supérieur à une quatrième valeur prédéterminée ;

- un troisième critère d'élimination est rempli si et seulement si l'excentricité du groupe de pixels activés connexes est inférieure à une valeur prédéterminée. L'excentricité est définie dans le mode de mise en oeuvre illustré comme le ratio entre le carré du périmètre et la surface, mais d'autres définitions peuvent être utilisées.

L'étape suivante g) du procédé consiste à identifier des gouttes dans le masque obtenu, chaque goutte correspondant à un groupe de pixels activés connexes. Le but de cette étape est de discrétiser l'information, et de fournir l'information sur les gouttes présentes dans l'image sous forme d'une liste de gouttes. De préférence, pour chaque goutte on extrait certaines informations, comme par exemple la position de la goutte dans l'image (numéros de ligne et de colonne). Naturellement, la position de la goutte peut être définie de différentes manières, par exemple son barycentre, par un point médian, etc. Pour chaque goutte, on peut aussi calculer différentes variables géométriques, comme la surface, le périmètre, etc.

Ces informations peuvent éventuellement être exploitées dès ce stade du procédé.

Cependant, avant d'exploiter ces informations, il est préférable de les raffiner ou de les épurer, en supprimant certaines des gouttes identifiées au cours des étapes précédentes, dès lors que l'on peut se rendre compte qu'il s'agit en fait d'artefacts et non de gouttes.

Pour cela, le procédé comporte une étape suivante h) qui consiste à raffiner encore l'information obtenue en produisant un masque 'confirmé' I21. Cette étape h) se fonde sur le constat qu'une goutte reste généralement à une position constante sur la surface sur laquelle elle se trouve ; aussi, elle doit être détectée à cette position sur la totalité ou du moins une grande partie des images. Ce principe est naturellement particulièrement efficace dans le cas de gouttes formées sur un pare-brise d'un véhicule en mouvement, puisqu'alors a contrario, les pixels figurant les éléments du paysage changent de valeur en permanence.

Sur la base de ce principe, on détermine le masque confirmé I21 en ne conservant dans ce masque que les gouttes apparaissant dans au moins une proportion prédéterminée des masques I20, I120, I220, I320 précédemment obtenus. En l'occurrence, le critère choisi pour conserver une goutte dans le masque confirmé I21 consiste à exiger que la goutte soit détectée dans 100% des masques obtenus au cours des étapes précédentes.

Or, dans l'exemple présenté, trois des gouttes ont été systématiquement détectées dans les quatre masques I20-I320 obtenus, mais une des gouttes (celle située en haut à droite des images, goutte 'B' sur les figures 5 à 9) n'a pas été détectée ou retenue dans le masque I320. In s'ensuit que cette goutte 'B' est éliminée du masque confirmé I21 (figure 4).

En pratique, dans le procédé présenté, cette exigence est vérifiée de la manière suivante :

- on détermine la position des points médians de toutes les gouttes détectées, dans chacun des masques étudiés (I20-I120-I220-I320) ;

- Pour toute goutte présente dans le premier masque (I20) de la série de masques étudiés, on vérifie que dans chacun des masques obtenus aux étapes ultérieures (I120-I220-I320), il existe au moins une goutte dont le point médian est distant de celui de la goutte étudiée d'une distance prédéterminée. Si cette propriété est vérifiée pour chacun des masques obtenus aux étapes ultérieures, la goutte est conservée dans le masque confirmé (I21) ; dans le cas contraire, elle est considérée comme un artefact et supprimée, et les pixels correspondants du masque I21 sont désactivés.

Une fois obtenu le masque confirmé I21, on actualise (le cas échéant) les informations relatives aux gouttes détectées, produites au cours de l'étape g) du procédé (position, surface, périmètre, etc., des gouttes détectées).

Ensuite, à partir du masque confirmé I21, on évalue le nombre total 88 de gouttes détectées, chaque goutte correspondant donc à un groupe de pixels activés connexes. Dans l'exemple présenté, quarante gouttes ont été détectées sur l'ensemble de l'image de la figure 1.

Enfin, dans une étape i) du procédé, on envoie un signal de commande à une machine, ledit signal étant fonction du nombre ou de la densité de gouttes identifiées à l'étape précédente (ce nombre peut avoir diminué par rapport à sa valeur initiale, au cours de l'étape de confirmation du masque).

On comprend bien que l'information transmise peut être selon les cas soit le nombre de gouttes lui-même, soit la densité de gouttes, obtenue en divisant, sur différentes régions d'intérêt, le nombre de gouttes par la surface de la région d'intérêt, ou encore une indication binaire absence/présence de gouttes ou de pluie. Dans ce dernier cas, un critère est choisi pour faire passer à 1 la valeur de l'indicateur ; par exemple, on peut considérer qu'il pleut (présence de gouttes) dès lors que le nombre de gouttes est supérieur à un nombre prédéterminé.

Dans l'application présentée par les figures, on transmet l'information du nombre de gouttes à l'unité de commande électronique 108. Celle-ci en déduit s'il est nécessaire ou non d'activer les essuie-glaces 110 ou éventuellement, d'adapter la vitesse et/ou la fréquence de balayage de ceux-ci. En l'occurrence, à réception de l'information suivant laquelle quarante gouttes se trouvent sur le pare-brise, l'unité de commande 108 déclenche les essuie-glaces, et pour cela transmet une commande d'actionnement à un moteur électrique 109, qui actionne alors les essuie-glaces 110. L'unité de commande 108 associée au moteur électrique 109 et aux essuie-glaces 110 constitue un système d'essuie-glaces.

Le procédé présenté par le mode de mise en oeuvre présenté se caractérise par l'utilisation d'une séquence d'images, ce qui permet de réaliser d'abord la détermination d'images moyennes I16-I116-I216-I316, puis l'obtention de masques I20-I120-I220-I320, et enfin l'obtention d'un masque confirmé I21. Naturellement, le procédé selon l'invention peut être mis en oeuvre à partir d'une seule image ; il peut aussi être mis en oeuvre de manière à calculer un masque pour chacune des images de départ I11-I15, I111-I115, I211-I215, I311-I315 ; il peut aussi être mis en oeuvre en moyennant d'abord l'ensemble des images de la séquence I11-I15, I111-I115, I211-I215, I311-I315, mais sans confirmation du masque au cours d'une étape h) du procédé dans ce cas.

**Revendications**

1. Procédé de détection de gouttes (A,B,C,D) apparaissant dans une image numérique (I11-I15,I111-I115,I211-I215,I311-I315) acquise à travers une paroi transparente à l'aide d'un système d'acquisition d'image (104), le procédé comportant l'étape suivante :

   b) on établit une image de gradient (I17) à partir de ladite image numérique (I16), en affectant à chaque pixel la valeur du gradient à l'emplacement du pixel ;
   le procédé **se caractérisant en ce qu'**il comporte en outre les étapes suivantes :
   c) on filtre ladite image de gradient pour obtenir une image filtrée (I18), en affectant à chaque pixel une valeur obtenue en appliquant un filtre de rang à un voisinage du pixel ;
   d) on établit alors un masque (I19) représentant la position des gouttes détectées dans ladite image numérique, masque dans lequel sont activés les pixels pour lesquels la différence entre la valeur du pixel dans l'image filtrée et la valeur du pixel dans l'image de gradient excède une valeur prédéterminée.

2. Procédé selon la revendication 1, comportant en outre l'étape suivante :

   e) on complète le masque en y activant des pixels non activés, situés entre des pixels activés proches (I20).

3. Procédé selon la revendication 1 ou 2, comportant en outre l'étape suivante :

   f) on épure le masque en désactivant dans celui-ci des groupes de pixels activés connexes remplissant au moins un critère d'élimination prédéterminé, portant sur une propriété du groupe de pixels connexes.

4. Procédé selon la revendication 3, dans lequel un critère d'élimination pris en compte à l'étape f) est rempli si et seulement si le nombre de pixels du groupe de pixels activés connexes est inférieur à une première valeur prédéterminée et/ou supérieur à une deuxième valeur prédéterminée.

5. Procédé selon la revendication 3 ou 4, dans lequel un critère d'élimination pris en compte à l'étape f) est rempli si et seulement si le rapport entre la hauteur et la largeur du groupe de pixels activés connexes est inférieur à une troisième valeur prédéterminée et/ou supérieur à une quatrième valeur prédéterminée.

6. Procédé selon l'une quelconque des revendications 3 à 5, dans lequel un critère d'élimination pris en compte à l'étape f) est rempli si et seulement si l'excentricité du groupe de pixels activés connexes est inférieure à une valeur prédéterminée.

7. Procédé de détection de gouttes à partir d'une pluralité d'images numériques, suivant lequel dans une étape initiale a), on moyenne ladite pluralité d'images numériques de manière à obtenir une image moyenne (I16), qui forme l'image numérique sur la base de laquelle on met en oeuvre le procédé selon l'une quelconque des revendications 1 à 6.

8. Procédé de détection de gouttes selon l'une quelconque des revendications 1 à 7, comportant en outre l'étape suivante :

   g) on identifie des gouttes (A,B,C,D) dans le masque obtenu, chaque goutte correspondant à un groupe de pixels activés connexes.

9. Procédé de détection de gouttes apparaissant dans une pluralité d'images numériques (I11-I15,I111-I115,I211-I215,I311-I315) acquises à travers une paroi transparente à l'aide d'un système d'acquisition d'image (104), le procédé comportant les étapes suivantes :

   - on obtient successivement une pluralité de masques (I20,I120,I220,I320) à partir desdites images numériques, par le procédé défini par la revendication 8 ;

- au cours d'une étape h), on établit un masque confirmé (I21), contenant les gouttes apparaissant dans au moins une proportion prédéterminée des masques ainsi obtenus.

10. Procédé de détection de gouttes selon la revendication 8 ou 9, comportant en outre l'étape suivante :

i) on envoie un signal de commande à une machine (108,109,110), ledit signal étant fonction du nombre ou de la densité de gouttes identifiées à l'étape g), notamment dans le cas où la machine est un système d'essuie-glaces.

11. Programme d'ordinateur comprenant des instructions pour la mise en oeuvre d'un procédé de détection de gouttes selon l'une quelconque des revendications 1 à 10.

12. Dispositif (100) de détection de gouttes, comportant un système d'acquisition d'image (104) et un calculateur (108) relié à celui-ci pour recevoir des images (I11-I15,I111-I115,I211-I215,I311-I315) acquises à travers une paroi transparente par le système d'acquisition d'image (104), le calculateur étant apte à mettre en oeuvre le procédé selon l'une quelconque des revendications 1 à 10.

**Patentansprüche**

1. Verfahren zur Erfassung von Tropfen (A, B, C, D), die in einem durch eine transparente Wand mit Hilfe eines Bildaufnahmesystems (104) aufgenommenen Digitalbild (I11-I15,I111-I115, I211-I215, I311-I315) auftreten, wobei das Verfahren den folgenden Schritt umfasst:

b) anhand des Digitalbildes (116) wird ein Gradientenbild (117) dadurch erstellt, dass jedem Pixel der Wert des Gradienten an der Stelle des Pixels zugewiesen wird,
wobei das Verfahren **dadurch gekennzeichnet ist, dass** es ferner die folgenden Schritte umfasst:
c) das Gradientenbild wird für den Erhalt eines gefilterten Bildes (118) dadurch gefiltert, dass jedem Pixel ein Wert zugewiesen wird, der durch Anwenden eines Rangordnungsfilters auf eine Umgebung des Pixels erhalten wird,
d) nun wird eine Maske (119) erstellt, die die Position der in dem Digitalbild erfassten Tropfen darstellt, Maske, in der die Pixel aktiviert werden, bei denen die Differenz zwischen dem Wert des Pixels in dem gefilterten Bild und dem Wert des Pixels in dem Gradientenbild einen vorbestimmten Wert überschreitet.

2. Verfahren nach Anspruch 1, ferner umfassend den folgenden Schritt:

e) die Maske wird dadurch vervollständigt, dass hierin nicht aktivierte Pixel, die zwischen nahen aktivierten Pixeln (I20) gelegen sind, aktiviert werden.

3. Verfahren nach Anspruch 1 oder 2, ferner umfassend den folgenden Schritt:

f) die Maske wird dadurch gereinigt, dass in ihr Gruppen von zusammenhängenden aktivierten Pixeln, die wenigstens ein vorbestimmtes Eliminationskriterium, das eine Eigenschaft der Gruppe zusammenhängender Pixel betrifft, erfüllen, deaktiviert werden.

4. Verfahren nach Anspruch 3, wobei ein bei Schritt f) berücksichtigtes Eliminationskriterium genau dann erfüllt ist, wenn die Pixelanzahl der Gruppe zusammenhängender aktivierter Pixel kleiner ist als ein vorbestimmter erster Wert und/oder größer ist als ein vorbestimmter zweiter Wert.

5. Verfahren nach Anspruch 3 oder 4, wobei ein bei Schritt f) berücksichtigtes Eliminationskriterium genau dann erfüllt ist, wenn das Verhältnis zwischen der Höhe und der Breite der Gruppe zusammenhängender aktivierter Pixel kleiner ist als ein vorbestimmter dritter Wert und/oder größer ist als ein vorbestimmter vierter Wert.

6. Verfahren nach einem der Ansprüche 3 bis 5, wobei ein bei Schritt f) berücksichtigtes Eliminationskriterium genau dann erfüllt ist, wenn die Exzentrizität der Gruppe zusammenhängender aktivierter Pixel geringer als ein vorbestimmter Wert ist.

7. Verfahren zur Erfassung von Tropfen anhand einer Vielzahl von Digitalbildern, wonach in einem Anfangsschritt a) die Vielzahl von Digitalbildern gemittelt wird, um ein Durchschnittsbild (I16) zu erhalten, welches das Digitalbild bildet, auf dessen Grundlage das Verfahren nach einem der Ansprüche 1 bis 6 durchgeführt wird.

8. Tropfenerfassungsverfahren nach einem der Ansprüche 1 bis 7, ferner umfassend den folgenden Schritt:

g) in der erhaltenen Maske werden Tropfen (A, B, C, D) festgestellt, wobei jeder Tropfen einer Gruppe zusammenhängender aktivierter Pixel entspricht.

**9.** Verfahren zur Erfassung von Tropfen, die in einer Vielzahl von durch eine transparente Wand mit Hilfe eines Bildaufnahmesystems (104) aufgenommenen Digitalbildern (I11-I15, I111-I115, I211-I215, I311-I315) auftreten, wobei das Verfahren die folgenden Schritte umfasst:

- man erhält nacheinander anhand der Digitalbilder, durch das durch Anspruch 8 definierte Verfahren, eine Vielzahl von Masken (I20, I120, I220, I320),
- im Laufe eines Schrittes h) wird eine bestätigte Maske (I21) erstellt, welche die in wenigstens einem vorbestimmten Anteil der so erhaltenen Masken auftretenden Tropfen enthält.

**10.** Tropfenerfassungsverfahren nach Anspruch 8 oder 9, ferner umfassend den folgenden Schritt:

i) ein Steuersignal wird an eine Einrichtung (108, 109, 110) gesendet, wobei das Signal von der Anzahl oder von der Dichte der bei Schritt g) festgestellten Tropfen abhängig ist, insbesondere in dem Fall, in dem die Einrichtung ein Scheibenwischersystem ist.

**11.** Computerprogramm, das Befehle für die Durchführung eines Tropfenerfassungsverfahrens nach einem der Ansprüche 1 bis 10 umfasst.

**12.** Vorrichtung (100) zur Erfassung von Tropfen, umfassend ein Bildaufnahmesystem (104) und einen Rechner (108), der mit diesem verbunden ist, um durch eine transparente Wand mittels des Bildaufnahmesystems (104) aufgenommene Bilder (I11-I15, I111-I115, I211-I215, I311-I315) zu empfangen, wobei der Rechner geeignet ist, das Verfahren nach einem der Ansprüche 1 bis 10 durchzuführen.

**Claims**

**1.** A method for detection of drops (A,B,C,D) appearing in a digital image (I11-I15, I111-I115, I211-I215, I311-I315) acquired through a transparent wall by means of an image acquisition system (104), the method comprising the following step:

b) a gradient image (I17) is established from said digital image (I16), by assigning to each pixel the value of the gradient at the position of the pixel;
the method being **characterized by** further comprising the following steps:
c) said gradient image is filtered to obtain a filtered image (I18), by assigning to each pixel a value obtained by applying a rank filter to a neighbourhood of the pixel;

d) a mask (I19) is then established representing the position of the detected drops in said digital image, in which mask the pixels for which the difference between the value of the pixel in the filtered image and the value of the pixel in the gradient image exceeds a predetermined value are activated.

**2.** The method according to claim 1, further comprising the following step:

e) the mask is completed by activating therein non-activated pixels, located between neighbouring activated pixels (120).

**3.** The method according to claim 1 or 2, further comprising the following step:

f) the mask is refined by deactivating therein groups of activated connected pixels fulfilling at least one predetermined criterion of elimination, relating to a property of the group of connected pixels.

**4.** The method according to claim 3, in which a criterion of elimination taken into account at step f) is fulfilled if and only if the number of pixels of the group of activated connected pixels is less than a first predetermined value and/or greater than a second predetermined value.

**5.** The method according to claim 3 or 4, in which a criterion of elimination taken into account at step f) is fulfilled if and only if the ratio between the height and the width of the group of activated connected pixels is less than a third predetermined value and/or greater than a fourth predetermined value.

**6.** The method according to any one of claims 3 to 5, in which a criterion of elimination taken into account at step f) is fulfilled if and only if the eccentricity of the group of activated connected pixels is less than a predetermined value.

**7.** A method for detection of drops from a plurality of digital images, in which in an initial step a) said plurality of digital images is averaged so as to obtain a mean image (I16), which forms the digital image on the basis of which the method according to any one of claims 1 to 6 is carried out.

**8.** The method for detection of drops according to any one of claims 1 to 7, further comprising the following step:

g) drops (A,B,C,D) in the mask obtained are identified, each drop corresponding to a group of activated connected pixels.

**9.** A method for detection of drops appearing in a plurality of digital images (I11-I15, I111-I115, I211-I215, I311-I315) acquired through a transparent wall by means of an image acquisition system (104), the method comprising the following steps:

- a plurality of masks (120, I120, I220, 1320) is established successively from said digital images, by the method according to claim 8;
- during a step h), a confirmed mask (121) is established containing the drops appearing in at least a predetermined proportion of the masks obtained in this way.

**10.** The method for detection of drops according to claim 8 or 9, further comprising the following step:

i) a control signal is sent to a machine (108, 109, 110), said signal being function of the number or of the density of drops identified at step g), especially in the case where the machine is a window wiper system.

**11.** A computer program comprising instructions for executing a method for detecting drops according to any one of claims 1 to 10.

**12.** A device (100) for detection of drops, comprising an image acquisition system (104) and a calculator (108) connected to the latter for receiving images (I11-I15, I111-I115, 1211-1215, I311-I315) acquired through a transparent wall by the image acquisition system (104), the calculator being suitable for executing the method according to any one of claims 1 to 10.

FIG.1

FIG.2

FIG.3

I11-I15   I111-I115   I211-I215   I311-I315

a   a   a   a

I16   I116   I216   I316

b-g   b-g   b-g   b-g

I20   I120   I220   I320

h

I21

i

88

j

108

ECU

110

## FIG.4

109

FIG.5

FIG.6

I18

80

78

**FIG.7**

I19

84A

84B

86A

86B

84C

84D

86C

86D

**FIG.8**

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

•   US 6313454 B1

**Littérature non-brevet citée dans la description**

•   **DE MM.KURIHATA et al.** Rainy Weather Recognition from In-vehicle Camera Images for Driver Assistance. *Intelligent Vehicles Symposium, IEEE,* 2005, 205-210